# EUROPÄISCHE PATENTSCHRIFT

(11) **EP 2 146 867 B1**
(45) Veröffentlichungstag und Bekanntmachung des Hinweises auf die Patenterteilung: **15.05.2013**
(21) Anmeldenummer: 08716422.4
(22) Anmeldetag: 11.03.2008
(51) Int. Cl.: B60N 2/12, B60N 2/235, B60N 2/30

(54) **BETÄTIGUNGSEINRICHTUNG, INSBESONDERE FÜR EINEN FAHRZEUGSITZ**
ACTUATING DEVICE, PARTICULARLY FOR A VEHICLE SEAT
DISPOSITIF D'ACTIONNEMENT, EN PARTICULIER POUR UN SIÈGE DE VÉHICULE

(30) Priorität: 16.03.2007 DE 102007013380; 07.08.2007 DE 102007037138
(43) Veröffentlichungstag der Anmeldung: 27.01.2010
(73) Patentinhaber: Johnson Controls GmbH, 51399 Burscheid (DE)
(72) Erfinder: MÜHLENBROCK, Ludger, 45665 Recklinghausen (DE); SEIBT, Jörg, 50823 Köln (DE)
(74) Vertreter: Wolff, Felix
(86) Internationale Anmeldenummer: PCT/EP2008/001913
(87) Internationale Veröffentlichungsnummer: WO 2008/113491

(56) Entgegenhaltungen:
- WO-A-2004/069585
- WO-A-2005/097544
- DE-A1- 10 025 606
- US-A- 5 058 240
- US-A- 5 733 008
- US-A- 6 139 105
- US-A1- 2001 030 456
- US-A1- 2002 050 733
- US-A1- 2002 153 755
- US-A1- 2003 189 372
- US-A1- 2005 218 685
- US-A1- 2007 080 554

## Beschreibung

Die Erfindung betrifft eine Betätigungseinrichtung mit einem Antriebsteil, das ein Abtriebsteil, von einer Initialstellung in eine Endstellung bewegt. Des Weiteren betrifft die vorliegende Erfindung einen Fahrzeugsitz aufweisend die erfindungsgemäße Betätigungsvorrichtung.

Eine derartige Betätigungsvorrichtung ist beispielsweise aus der US 6,629,710 B1, der US-A-6139105, der WO-A-2005097 und der US-A-5058240 bekannt. Die dort offenbarte Betätigungsvorrichtung betrifft eine Vorrichtung zum reversiblen Verriegeln des Fahrzeugsitzes an der Kraftfahrzeugkarosserie. Ein weiterer Stand der Technik ist die DE 8 619 457 U1, die einen elektrischen Wippschalter betrifft.

Der vorliegende Erfindung liegt die Aufgabe zugrunde, eine Betätigungsvorrichtung zur Verfügung zu stellen, bei der toleranz- und/oder beispielsweise durch ein Taumelgetriebe bedingte Winkelabweichungen in der Drehstellung des Antriebsteils zumindest nicht vollständig auf die Endstellung des Abtriebteils übertragen werden.

Gelöst wird die Aufgabe mit einer Betätigungseinrichtung gemäß Anspruch 1.

Die erfindungsgemäße Betätigungsvorrichtung hat den Vorteil, dass sich toleranz-und/oder durch ein Taumelgetriebe bedingte Winkelabweichungen in der Drehstellung des Antriebsteils zumindest nicht vollständig auf die Endstellung des Abtriebsteils übertragen. Dadurch ist die Bewegung des Abtriebsteils weder zu kurz noch zu lang, so dass zum einen dessen gewünschte Endstellung sicher erreicht, zum anderen jedoch verhindert wird, dass sich das Abtriebsteil zu weit bewegt und dadurch beschädigt wird und/oder nachgeordnete Bauteile beeinträchtigt werden.

Die erfindungsgemäße Betätigungsvorrichtung oder Bauteile, mit denen sie zusammenwirkt, können günstiger und/oder einfacher hergestellt werden, weil größere Fertigungstoleranzen zulässig sind. Außerdem kann die erfindungsgemäße Betätigungsvorrichtung mit anderen Baugruppen, wie beispielsweise Taumelgetrieben, kombiniert werden als dies bei Betätigungsvorrichtungen nach dem Stand der Technik möglich ist.

Erfindungsgemäß weist die Betätigungsvorrichtung ein Antriebsteil auf. Bei diesem Antriebsteil handelt es sich vorzugsweise um ein Drehteil, insbesondere um einen Drehhebel oder eine Nocke.

Erfindungsgemäß treibt das Antriebsteil ein Antriebsteil an. Vorzugsweise wirkt das Antriebssteil mit seinem von seiner Drehachse beabstandeten Ende mit dem Abtriebsteil zusammen. Weiterhin erfindungsgemäß nimmt das Abtriebsteil mindestens zwei Stellungen, nämlich seine Initialstellung und seine Endstellung ein, wobei es sich vorzugsweise in der Initialstellung befindet, bevor es von dem Antriebsteil angetrieben worden ist. Erfolgt dann der Antrieb des Antriebsteils, wird das Abtriebsteil von dem Antriebsteil von der Initial- in die Endstellung überführt. Dafür weist das Abtriebsteil oder das Antriebsteil zwei Bereiche auf. In dem ersten Bereich wird das Abtriebsteil von dem Antriebsteil von der Initial- in die Endstellung überführt. In dem zweiten Bereich wird lediglich eine Rückbewegung des Abtriebsteils in die Initialstellung verhindert. In diesem zweiten Bereich kann sich das Antriebsteil demnach bewegen und mit dem Abtriebsteil zusammenwirken, ohne dass sich das Abtriebsteil mitbewegt. Durch den zweiten Bereich wird demnach bewirkt, dass sich das Antriebsteil bewegen, beispielsweise drehen, kann, ohne dass das Abtriebsteil weiter mitbewegt wird und dadurch Schaden nimmt. Vorzugsweise weist der zweite Bereich demnach eine Form auf, die der Drehbewegung des Teils des Antriebsteils entspricht, der mit dem Abtriebsteil zusammenwirkt. Führt das Antriebsteil beispielsweise eine Drehbewegung aus, ist der zweite Bereich vorzugsweise kreisbogenförmig gestaltet.

Vorzugsweise sind das Antriebteil und/oder das Antriebsteil Drehelemente, beispielsweise Drehhebel.

Vorzugsweise weisen das Antriebsteil und/oder das Abtriebsteil Elemente, beispielsweise Federelemente, auf, die sie jeweils in ihre jeweilige Initialstellung zurückführen.

Vorzugsweise sind der erste und der zweite Bereich unmittelbar benachbart an dem An- oder Abtriebsteil angeordnet.

Die erfindungsgemäße Betätigungsvorrichtung eignet sich insbesondere um einen Fahrzeugsitz zu verstellen und/oder zu verriegeln. Ein weiterer Gegenstand der vorliegenden Erfindung ist deshalb ein Fahrzeugsitz, der die oben beschriebene Betätigungsvorrichtung aufweist.

Der erfindungsgemäße Fahrzeugsitz kann einer oder mehreren Personen Platz bieten. Bei dem Fahrzeugsitz kann es sich demnach auch um eine Sitzbank handeln. Dieser Fahrzeugsitz ist in einem Fahrzeug, vorzugsweise einem Kraftfahrzeug, angeordnet. Vorzugsweise ist, bezogen auf die Vorwärtsfahrtrichtung des Fahrzeuges, hinter dem erfindungsgemäßen Fahrzeugsitz noch mindestens ein weiterer Sitz angeordnet.

Mit der Betätigungsvorrichtung können alle denkbaren Funktionen eines Fahrzeugsitzes betätigt werden. Vorzugsweise wirkt die Betätigungsvorrichtung. jedoch mit einem Versteil- und/oder Verriegelungsmechanismus zusammen.

Besonders bevorzugt wirkt die Betätigungsvorrichtung mit dem Verriegelungsmechanismus einer Easy-Entry-Funktion zusammen. Ganz besonders bevorzugt ist das Antriebsteil Teil der Rückenlehne oder von dieser antreibbar, so dass bei einer Verschwenkung der Rückenlehne relativ zu einem Sitzteil des Fahrzeugsitzes ein Verriegelungsmechanismus zwischen dem Fahrzeugsitz und der Fahrzeugkarosserie gelöst und der gesamte Sitz entlang einer Schiene in die Easy-Entry-Stellung gefahren werden kann, die ein einfacheres Einsteigen der Insassen, beispielsweise auf die Rückbank eines Kraftfahrzeuges, hinter dem erfindungsgemäßen Fahrzeugsitz erlaubt.

Vorzugsweise ist die Lage der Rückenlehne des Kraftfahrzeuges relativ zu dem Fahrzeugsitz verstellbar. Besonders bevorzugt erfolgt diese Verstellung mit einem sogenannten Recliner, der zwischen der Rückenlehne und dem Sitzteil angeordnet ist. Ganz besonders bevorzugt handelt es sich bei dem Recliner um einen sogenannten Taumelrecliner. Beim Einsatz eines Taumelrecliners ist die erfindungsgemäße Betätigungsvorrichtung besonders wertvoll, weil sich bei diesem Recliner die Drehachse zwischen der Rückenlehne und dem Sitzteil verändert. Trotz dieser Veränderungen stellt die erfindungsgemäße Betätigungsvorrichtung sicher, dass der Abtriebsteil seine Endstellung erreicht, aber nicht über diese hinaus gedreht wird.

Im Folgenden wird die Erfindung anhand der Figuren 1 - 3 erläutert. Diese Erläuterungen sind lediglich beispielhaft und schränken den allgemeinen Erfindungsgedanken nicht ein. Die Erläuterungen gelten für beide Erfindungsgegenstände gleichermaßen.
- Figur 1: zeigt die erfindungsgemäße Betätigungsvorrichtung in sieben Sequenzen.
- Figur 2: zeigt den erfindungsgemäßen Fahrzeugsitz.
- Figur 3a - d: zeigen Details des erfindungsgemäßen Fahrzeugsitzes im Bereich des Recliners.

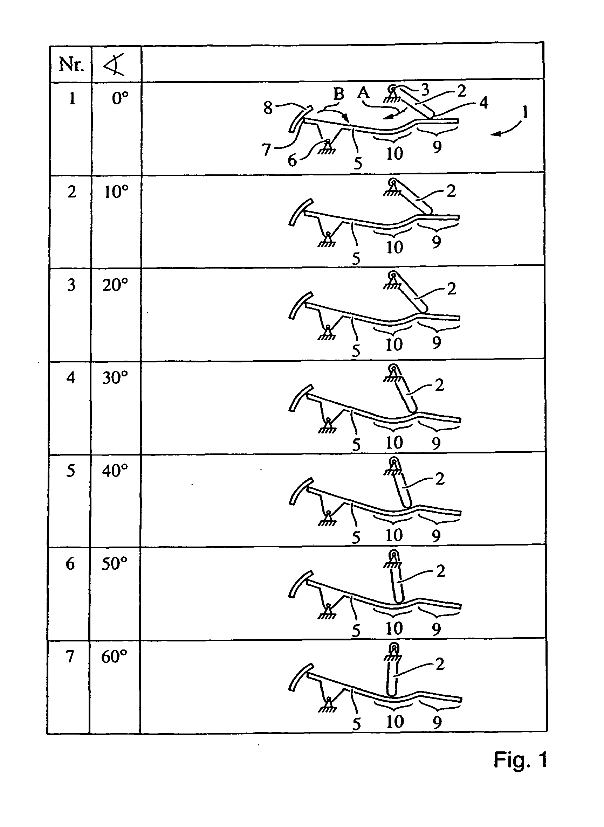

Die in Figur 1 gezeigte Betätigungseinrichtung 1 besteht aus einem antreibenden, hebelartigen Drehelement 2, weiches um eine Achse 3 drehbar ist. Bei seiner Betätigung führt sein freies Ende 4, wie durch Pfeil A dargestellt, eine Drehung aus und wirkt dabei auf ein wippenartiges abtreibendes Drehelement 5 ein. Dieses ist um eine zur Achse 3 parallel verlaufende Achse 6 drehbar und wird in Richtung des Pfeils B von einer Initialstellung (Nr. 1) in eine Endstellung (Nr. 4 - 7) verschwenkt. Mit seinem dem Drehelement 2 abgewandten Ende 7 übt das Drehelement 4 in Abhängigkeit von seiner Drehstellung eine Funktion auf eine Verstell- oder Verriegelungsvorrichtung, beispielsweise an einem Fahrzeugsitz 8, aus.

Der Fachmann versteht, dass auch das Drehelement 5 das Antriebsteil und das Drehelement 2 das Abtriebsteil sein kann.

Das freie Ende des Drehelements 2 führt bei seiner Drehung (Pfeil A) eine Bewegung entlang einer Kreisbahn aus, welche proportional zur Verdrehung der Achse 3 verläuft. Winkelfehler in der Stellung des Drehelements 2 bewirken dabei fortlaufend eine Fehlstellung des Endes 4 des Drehelements 2. Diese Winkelfehler können durch Toleranzen oder durch eine sich ändernde Lage der Drehachse 3 und/oder 6 hervorgerufen werden. Die Änderung der Lage der Drehachse kann durch einen Taumelrecliner bedingt sein. Um dennoch eine genau definierte Endstellung zu erreichen, weist der Kontaktbereich des Drehelements 5 mit dem freien Ende des Drehelements 2 einen der Achse 6 abgewandten geraden ersten Bereich 9 und einen sich daran anschließenden, der Achse 6 zugewandten zweiten Bereich 10 auf, welcher kreisbogenförmig verläuft. Die Kontur des Bereichs 10 entspricht der Bewegungsbahn des freien Endes 4 des Drehelementes 2, ist jedoch in Initialstellung der Betätigungseinrichtung (Drehwinkel 0°) in Richtung der Drehachse 3 versetzt ausgerichtet.

Bei einer Betätigung des Drehelements 2, im Ausführungsbeispiel Drehwinkel von 0° bis 30°, wird zunächst das abtreibende Drehelement 5 in Richtung des Pfeils B verdreht, wobei Stellungsfehler des Drehelements 2 übertragen werden. Sobald das freie Ende 4 den Übergang vom Bereich 9 zum Bereich 10 erreicht, hier bei einem Drehwinkel von 30° Grenzstellung (vgl. Nr. 4), ist der Bereich 10 genau entlang der weiteren Bewegungsbahn des freien Endes 4 ausgerichtet. Weitere Drehwinkeländerungen, hier 30° bis 60° (vgl. Nr. 4 - 7), des antreibenden Drehelements 2 führen daher nicht mehr zu einem Verdrehen des abtreibendes Drehelements 5, vielmehr verhindert das antreibende Drehelements 2 nur noch dessen Rückdrehung in die Initialstellung. Das abtreibende Drehelement 5 nimmt also in diesem Winkelbereich stets die gleiche Drehposition relativ zur Verstell- oder Verriegelungsvorrichtung des Fahrzeugsitzes 8 ein.

Die Winkelangaben entsprechen den Winkelstellungen der Rückenlehne bei einer Easy-Entry-Funktion. Die Rückenlehne wird aus einer im Wesentlichen vertikalen Stellung um ca. 60° nach vorne gedreht.

Erfindungswesentlich ist also, dass eine Bewegung des antreibenden Drehelements 2 nur über einen Teilbereich seines Bewegungsweges eine Bewegung des abtreibenden Drehelements 5 zur Folge hat und beim Überschreiten einer Grenzstellung nur noch die Rückdrehung des abtreibenden Drehelements 5 bewirkt. Dadurch wird das Drehelement 5 immer in eine genau definierte Endposition verdreht.

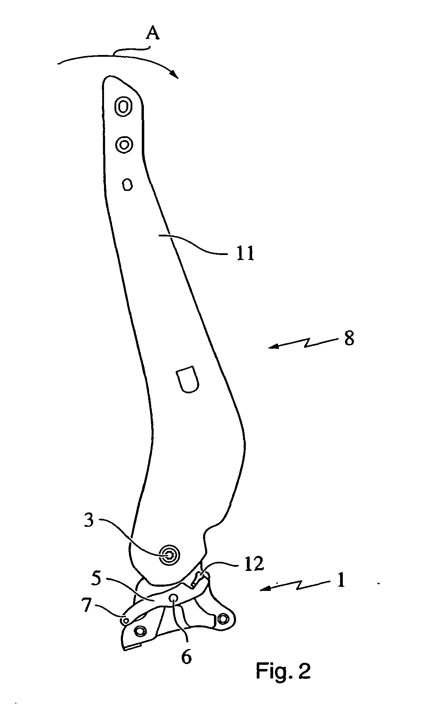

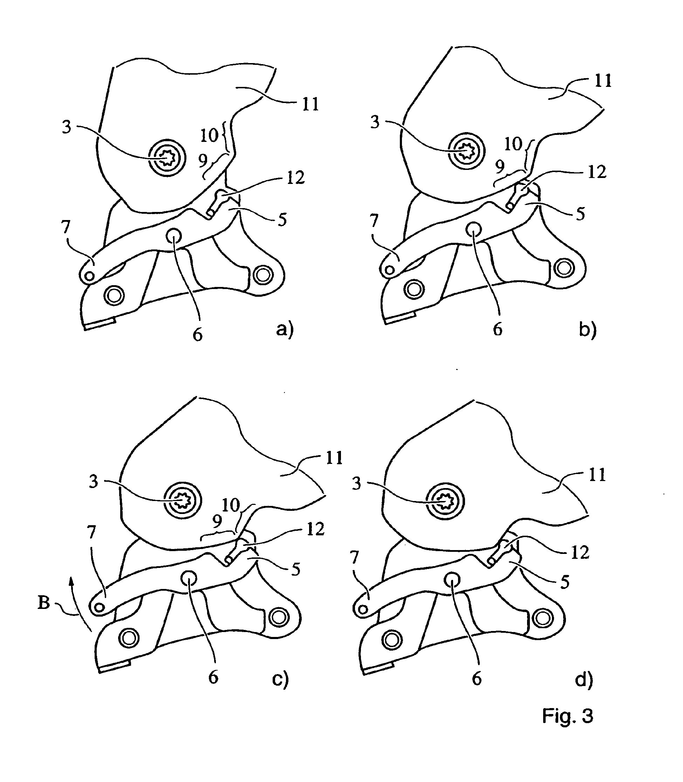

Die Figuren 2 und 3 zeigen einen erfindungsgemäßen Fahrzeugsitz mit der erfindungsgemäßen Betätigungseinrichtung 1. Der Fahrzeugsitz ist mit einer Easy-Entry-Funktion ausgestattet, welche zum Lösen einer Schienenverriegelung beim Vorklappen der Rückenlehne 11 (Pfeil A) dient.

Die Betätigungseinrichtung 1 umfasst als antreibendes Drehelement 2 die Rückenlehne 11, welche um eine Achse 3 drehbar ist. Die Außenkontur der Rückenlehne 11 wirkt dabei auf ein Gleitstück 12 des abtreibenden Drehelements 5 ein, welches um die Achse 6 schwenkbar ist und mittels eines am freien Ende 7 befestigten Bowdenzugs mit der Schienenverriegelung wirkverbunden ist.

Wie aus Figur 3 ersichtlich, ist die Außenkontur der Rückenlehne 11, die dem freien Ende 4 der Ausbildung nach Figur 1 entspricht, in Initialstellung (Drehwinkel 0°, Rückenlehne aufrecht) nicht in Kontakt mit dem Gleitstück 10 (Figur 3a). Dies geschieht erst beim Vorklappen der Rückenlehne 9 um einen Drehwinkel von 23° (Figur 3b). Das Gleitstück 10 gleitet von da an zunächst unter Verdrehung des Drehelements 5 entlang des ersten Bereichs 9, bis die Außenkontur der Rückenlehne 11 bei Erreichen der Grenzstellung (Figur 3c, Drehwinkel 38°) in den le zweiten Bereich 10 übergeht. Diese Grenzstellung ist die gewünschte Endstellung des Drehelementes 5. Ein weiteres Vorschwenken der Rückenlehne (hier bis 48°, siehe Figur 3d) hat keine weitere Verdrehung des Drehelements 5 zur Folge. Der vom Bowdenzug auf die Schienenverriegelung übertragene Verstellweg ist also in zwischen einem Drehwinkel von 38° und 48° unverändert. Dadurch wird ein Reißen des Bowdenzuges oder eine Beschädigung von an den Bowdenzug angeschlossenen Baugruppen verhindert.

### Bezugszeichenliste

| | |
|---|---|
| 1 | Betätigungseinrichtung |
| 2 | Antriebsteil, Drehelement (antreibend) |
| 3 | Achse |
| 4 | Ende (des Drehelements 2) |
| 5 | Abtriebsteil, Drehelement (abtreibend) |
| 6 | Achse |
| 7 | Ende (des Drehelements 5) |
| 8 | Fahrzeugsitz |
| 9 | erster Bereich |
| 10 | zweiter Bereich |
| 11 | Rückenlehne |
| 12 | Gleitstück |

## Patentansprüche

1. Betätigungseinrichtung (1) mit einem Antriebsteil (2), das ein Abtriebsteil (5), von einer Initialstellung in eine Endstellung bewegt, wobei der Abtriebsteil (5) oder der Antriebsteil einen ersten Bereich (9) und einen zweiten Bereich (10) aufweist und der Antriebsteil (2) oder der Abtriebsteil (5) mit beiden Bereichen (9, 10) zusammenwirkt, **dadurch gekennzeichnet, dass** sich beim Zusammenwirken mit dem ersten Bereich die Lage des Abtriebsteils (5) von der Initialstellung in die Endstellung verändert und ein Zusammenwirken mit dem zweiten Bereich lediglich eine Rückbewegung des Abtriebsteils in die Initialstellung verhindert, so dass sich in diesem zweiten Bereich das Antriebsteil (2) bewegt und mit dem Abtriebsteil (2) zusammenwirkt, ohne dass sich das Abtriebsteil (5) mitbewegt.

2. Betätigungeinrichtung (1) nach Anspruch 1, **dadurch gekennzeichnet, dass** das Antriebteil (2) und/oder das Abtriebsteil (5) Drehelemente sind.

3. Betätigungsvorrichtung (1) nach einem der voranstehenden Ansprüche,
**dadurch gekennzeichnet, dass** die Bereiche (9, 10) unmittelbar benachbart sind.

4. Fahrzeugsitz aufweisend eine Betätigungsvorrichtung (1) nach einem der voranstehenden Ansprüche.

5. Fahrzeugsitz nach Anspruch 4, **dadurch gekennzeichnet, dass** die Betätigungsvorrichtung (1) mit einem Verstell- und/oder Verriegelungsmechanismus zusammenwirkt.

6. Fahrzeugsitz nach Anspruch 5, **dadurch gekennzeichnet, dass** der Verriegelungsmechanismus Teil eines Easy-Entry-Mechanismus ist.

7. Fahrzeugsitz nach Anspruch 6, **dadurch gekennzeichnet, dass** das Antriebsteil (2) Teil der Rückenlehne ist oder von dieser antreibbar ist.

8. Fahrzeugsitz nach einem der voranstehenden Ansprüche 4 bis 7, **dadurch gekennzeichnet, dass** er eine Taumelgetriebe zwischen Rückenlehne und Sitzteil aufweist.

## Claims

1. Actuating device (1) with a drive part (2) which moves an output part (5) from an initial position into a final position, wherein the output part (5) or the drive part has a first region (9) and a second region (10), and the drive part (2) or the output part (5) interacts with both regions (, 10), **characterized in that** the position of the output part (5) changes from the initial position into the final position upon interaction with the first region, and an interaction with the second region merely prevents the output part from moving back into the initial position, and therefore the drive part (2) moves in said second region and interacts with the output part (5) without moving the output part (5) at the same time.

2. Actuating device (1) according to Claim 1, **characterized in that** the drive part (2) and/or the output part (5) are rotary elements.

3. Actuating device (1) according to one of the preceding claims, **characterized in that** the regions (9, 10) are directly adjacent.

4. Vehicle seat having an actuating device (1) according to one of the preceding claims.

5. Vehicle seat according to claim 4, **characterized in that** the actuating device (1) interacts with an adjusting and/or locking mechanism.

6. Vehicle seat according to Claim 5, **characterized in that** the locking mechanism is part of an easy-entry mechanism.

7. Vehicle seat according to Claim 6, **characterized in that** the drive part (2) is part of the back rest or can be driven by the latter.

8. Vehicle seat according to one of the preceding Claims 4 to 7, **characterized in that** it has a tumbling mechanism between the back rest and seat part.

## Revendications

1. Dispositif d'actionnement (1) comprenant une partie d'entraînement (2) qui déplace une partie de sortie (5) d'une position initiale dans une position d'extrémité, la partie de sortie (5) ou la partie d'entraînement présentant une première région (9) et une deuxième région (10) et la partie d'entraînement (2) ou la partie de sortie (5) coopérant avec les deux régions (9, 10), **caractérisé en ce que** lors de la coopération avec la première région, la position de la partie de sortie (5) passe de la position initiale dans la position d'extrémité et une coopération avec la deuxième région empêche seulement un mouvement de retour de la partie de sortie dans la position initiale, de sorte que dans cette deuxième région, la partie d'entraînement (2) se déplace et coopère avec la partie de sortie (5), sans que la partie de sortie (5) ne soit entraînée avec elle.

2. Dispositif d'actionnement (1) selon la revendication 1, **caractérisé en ce que** la partie d'entraînement (2) et/ou la partie de sortie (5) sont des éléments rotatifs.

3. Dispositif d'actionnement (1) selon l'une quelconque des revendications précédentes, **caractérisé en ce que** les régions (9, 10) sont directement adjacentes.

4. Siège de véhicule présentant un dispositif d'actionnement (1) selon l'une quelconque des revendications précédentes.

5. Siège de véhicule selon la revendication 4, **caractérisé en ce que** le dispositif d'actionnement (1) coopère avec un mécanisme de réglage et/ou de verrouillage.

6. Siège de véhicule selon la revendication 5, **caractérisé en ce que** le mécanisme de verrouillage fait partie d'un mécanisme d'entrée facile.

7. Siège de véhicule selon la revendication 6, **caractérisé en ce que** la partie d'entraînement (2) fait partie du dossier ou peut être entraînée par celui-ci.

8. Siège de véhicule selon l'une quelconque des revendications précédentes 4 à 7, **caractérisé en ce qu'**il présente un engrenage oscillant entre le dossier et la partie de siège.
